Europäisches Patentamt

European Patent Office

Office européen des brevets

(11) Publication number: **0 349 788 B1**

# EUROPEAN PATENT SPECIFICATION

(45) Date of publication of patent specification: **30.12.92** (51) Int. Cl.⁵: **F01N 3/02**, F01N 9/00

(21) Application number: **89110396.2**

(22) Date of filing: **08.06.89**

(54) **Method and apparatus for controlling the regeneration of at least one particulate filter installed in a diesel engine.**

(30) Priority: **09.06.88 IT 6754088**

(43) Date of publication of application:
**10.01.90 Bulletin 90/02**

(45) Publication of the grant of the patent:
**30.12.92 Bulletin 92/53**

(84) Designated Contracting States:
**DE ES FR GB IT NL SE**

(56) References cited:
**US-A- 4 603 550**

**PATENT ABSTRACTS OF JAPAN, vol. 9, no.
238 (M-416)[1961], 25th September 1985,
page 110 M 416; & JP-A-60 93 109 (ISUZU
JIDOSHA K.K.) 24-05-1985**

**PATENT ABSTRACTS OF JAPAN, vol. 9, no.
264 (M-423)[1987], 22nd October 1985, page
73 M 423; & JP-A-60 111 013 (NISSAN
JIDOSHA K.K.) 17-06-1985**

**PATENT ABSTRACTS OF JAPAN, vol. 9, no.
261 (M-422)[1984], 18th October 1985, page
92 M 422; & JP-A-60 108 520 (MITSUBISHI
JIDOSHA KOGYO K.K.) 14-06-1985**

(73) Proprietor: **IVECO FIAT S.p.A.
Via Puglia 35
I-10156 Torino(IT)**

(72) Inventor: **Incardona, Mario
Corso Torino, 3/C
I-10095 Grugliasco(IT)**
Inventor: **Operti, Claudio
Via Ormea, 85
I-10100 Torino(IT)**

(74) Representative: **Jorio, Paolo et al
STUDIO TORTA Società Semplice Via Viotti 9
I-10121 Torino(IT)**

Rank Xerox (UK) Business Services

PATENT ABSTRACTS OF JAPAN, vol. 9, no. 235 (M-415)[1958], 21st September 1985, page 81 M 415; & JP-A-60 90 913 (MITSUBISHI JIDOSHA KOGYO K.K.) 22-05-1985

PATENT ABSTRACTS OF JAPAN, vol. 6, no. 163 (M-152)[1041], 26th August 1982, page 97 M 152; & JP-A-57 79 209 (NIPPON DENSO K.K.) 18-05-1982

PATENT ABSTRACTS OF JAPAN, vol. 7, no. 89 (M-207)[1234], 13th April 1983, page 48 M 207; & JP-A-58 13 115 (NISSAN JIDOSHA K.K.) 25-01-1983

## Description

This invention relates to a method and apparatus controlling the regeneration of at least one particulate filter installed in a diesel engine of non-supercharged or supercharged type.

As is well known, triggering and controlling the combustion of particles which have accumulated within a particulate filter (also known familiarly as a trap) are still the two major problems to be solved in the development of an efficient filtration system for the exhaust gas of a diesel engine. In this respect, the periodical process of oxidising the trapped carbon particles, commonly known by the term regeneration, is necessary in order to maintain the back pressure on the engine exhaust at an acceptable level. In the same manner, regeneration control is necessary to prevent excessive temperature being reached during particulate combustion, with possible destruction of the filter.

Regeneration is effected in various ways, but generally by operating thermal energy generators (burners etc.) when it is considered that the clogging of the filter has reached a suitable level between a maximum and a minimum limit.

The maximum limit is determined, as stated, by the need to avoid both excessive back pressure on the engine exhaust, with unacceptable deterioration in performance, and too high temperature during regeneration, which could lead to breakage of the filter.

More critical is the required minimum amount of particulate which has to be accumulated before regeneration can be initiated. If the quantity of particulate trapped in the filter is small there would certainly be no excess temperature, but in this case combustion would not be complete as the propagation of the flame front, for example in the last part of a ceramic filter, is sustained by the thermal energy released by the combustion of the carbon particles of the particulate.

It often happens that regeneration is triggered spontaneously when the quantity of particulate has not yet reached the aforesaid minimum level, so that combustion is not sustained. Thus at the end of regeneration there still remains particulate in the last part of the filter, this particulate then being added to that which collects during the next accumulation period. The initiation of the next regeneration on the basis of an average clogging evaluation could lead to irreversible damage to the filter. This is because the particulate will have accumulated to a larger extent in certain zones of the filter, with consequent greater development of thermal energy deriving from the combustion of the particulate.

A further drawback of current regeneration control systems is that the evaluation of the filter clogging is done by instruments the measurements of which could be affected by systematic errors or by errors consequent on particular environmental conditions such as the temperature at which the reading is taken. It is apparent that this situation can lead to the regeneration being initiated either early or late, leading to all the aforementioned consequences.

From the US-A-4 603 550, it is also known an exhaust particulate removing system, wherein the regeneration of the filter is effected by operating a burner controlled by a control unit in response of a signal corresponding to the difference of pressure between the inlet and the outlet, a signal of the temperature within the burner, and other signals of the operating conditions of the engine.

The object of the present invention is to provide a method and apparatus for controlling the regeneration of particulate filters for diesel engines which obviate the aforesaid drawbacks of the current systems.

Said object is attained according to the present invention by a method controlling the regeneration of at least one particulate filter installed in a diesel engine, wherein the level of clogging of said filter caused by progressive accumulation therein of the particulate is periodically calculated, and wherein an intentional regeneration of said filter is caused when said clogging level reaches a predetermined upper clogging limit, characterized by

- periodically comparing the last calculated clogging level with the previous calculated clogging level after said intentional regeneration;
- and defining a new upper clogging limit progressively lower than the previously defined upper clogging limit each time said comparison reveals a reduction of said clogging level.

Said object is further attained according to the present invention by a device controlling the regeneration of at least one particulate filter installed in a diesel engine, according to the above method, comprising means for measuring quantities related to the clogging of said filter by said particulate, means for processing said quantities and calculating the level of clogging of said filter caused by the progressive accumulation of said particulate, means for memorizing a predetermined upper clogging threshold for said filter, and regeneration means adapted to be controlled for an intentional regeneration of said filter when said level of clogging exceeds said predetermined clogging threshold, characterized by comparing means for periodically comparing the last clogging level calculated by said processing means with the previous calculated clogging level after said intentional regeneration, and control means responsive to said comparing means for causing said memorizing means to replace the memorized clogging threshold with a new clogging threshold progressively lower than the previously memorized clogging threshold each time a reduction of said clogging level is revealed.

The present invention will be more apparent from the description of a preferred embodiment thereof given hereinafter by way of non-limiting example with reference to the accompanying drawings in which:

Figure 1 is a simplified block diagram of an apparatus constructed in accordance with the present invention and shown in one example of application;

Figure 2 is a flow diagram representing a sequence of operations effected by the apparatus of Figure 1 under the control of a processing unit of the apparatus;

Figure 3 shows the relationship between two quantities measured by respective instruments of the apparatus of Figure 1 under different conditions; and

Figure 4 shows two examples of the action of the apparatus of Figure 1 under two different operating conditions.

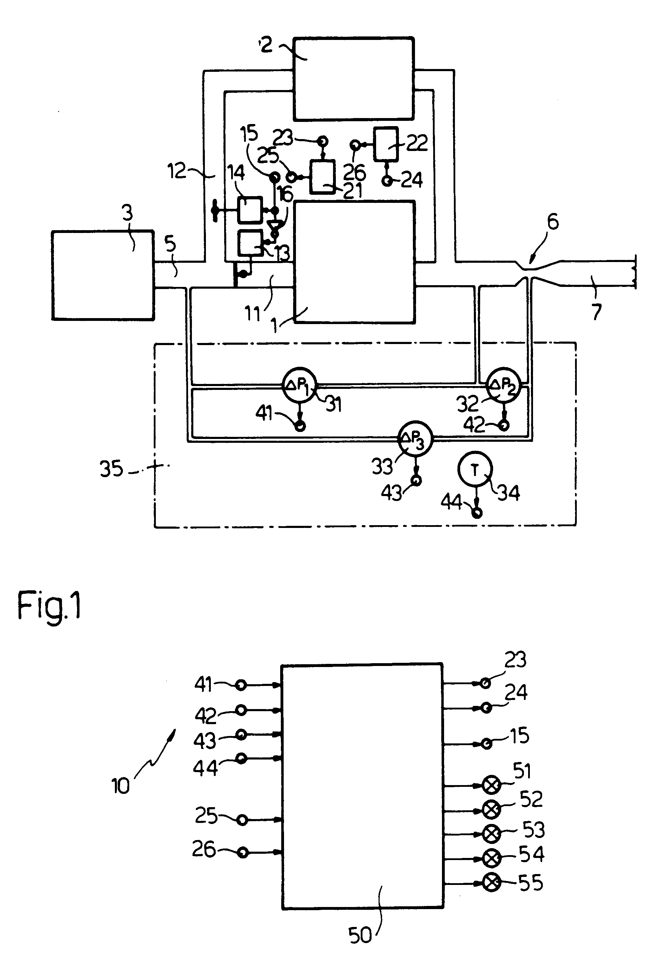

In Figure 1, the reference numeral 10 indicates overall an apparatus for controlling the regeneration of two filters 1 and 2 for the particulate present in the exhaust gas of a diesel engine 3. The filters 1 and 2 are substantially connected in parallel and are interposed between an exhaust gas collection pipe 5 disposed immediately downstream of the engine 3 and a venturi device 6 which is connected to a further pipe 7 carrying the exhaust gas.

The pipe 5 comprises two branches 11 and 12 which lead respectively to the filters 1 and 2 and into which there are connected solenoid valves 13 and 14 activated in opposition by an an electrical signal reaching a terminal 15 and which, in the case only of the solenoid valve 13, is negated by an inverting gate 16. each filter 1, 2 (consisting for example of a monolithic ceramic element) is provided with a respective burner (with its control system) 21, 22 of conventional type.

Each burner 21, 22 is connected both to a first terminal 23, 24 from which it receives a corresponding activation signal, and to a second terminal 25, 26, to which it transmits a corresponding control signal usable to indicate whether the burner and relative control system are active or not.

A first pressure difference sensor 31 is installed across the filters 1 and 2, a second pressure difference sensor 32 is installed between the outlets of the filters and the venturi device 6, and a third pressure difference sensor 33 is installed between the inlets to the filters 1 and 2 (upstream of the solenoid valves 13 and 14) and the venturi device 6.

The sensors 31, 32, 33 are enclosed, together with a temperature sensor 34, within a container 35 to keep them all at the same temperature (read by the sensor 34). The sensors 31, 32, 33, 34 generate respective signals which are fed to corresponding terminals 41, 42, 43, 44.

The apparatus 10 also comprises a processing and computing unit 50 (conveniently provided with a microprocessor) having a plurality of input and output terminals indicated by the same reference numerals as said terminals, to which they are connected in a manner not shown.

The unit 50 comprises a further five outputs connected to respective indicator lamps 51, 52, 53, 54, 55 which are activated respectively in the following case:

lamp 51: filter 1 connected
lamp 52: filter 2 connected
lamp 53: filter 1 undergoing regeneration
lamp 54: filter 2 undergoing regeneration
lamp 55: fault situation.

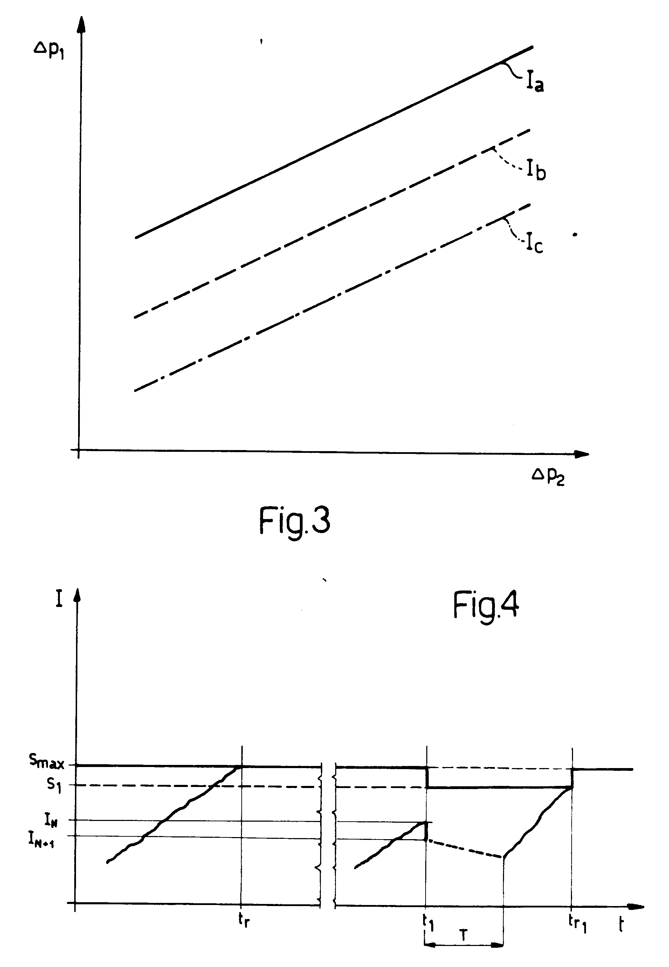

Figure 3 shows the relationship between the pressure difference $\Delta p2$ measured across the venturi device 6 and the pressure difference $\Delta p1$ measured across the filter 1 or 2, for three different decreasing clogging levels Ia, Ib, Ic of particulate trapped in the filter 1 or 2. In reality, the relationship is not linear as shown in Figure 3, in that the straight line segments shown in this figure are obtained by a multiple linear regression operation on a large number of measurements. It is in any event reasonable to consider that the clogging level of each filter 1 or 2 can be evaluated with good approximation simply by measuring the said values $\Delta p1$ and $\Delta p2$.

Figure 4 shows the variation in clogging with time for two operating conditions.

The first condition can be considered as the norm, in that the clogging increases progressively with time to provide a monotone increasing function which intercepts the maximum regeneration threshold Smax at time tr to initiate intentional regeneration at that moment.

The second condition involves spontaneous regeneration at time t1 which, as specified hereinafter, results in the exhaust gas flow being switched to the other filter for a time T (which terminates when spontaneous regeneration or intentional regeneration takes place in said other filter), the regeneration threshold being reduced to the value S1 (less than Smax), and subsequent intentional regeneration at time tr1, with reinstatement of the value Smax as regeneration threshold.

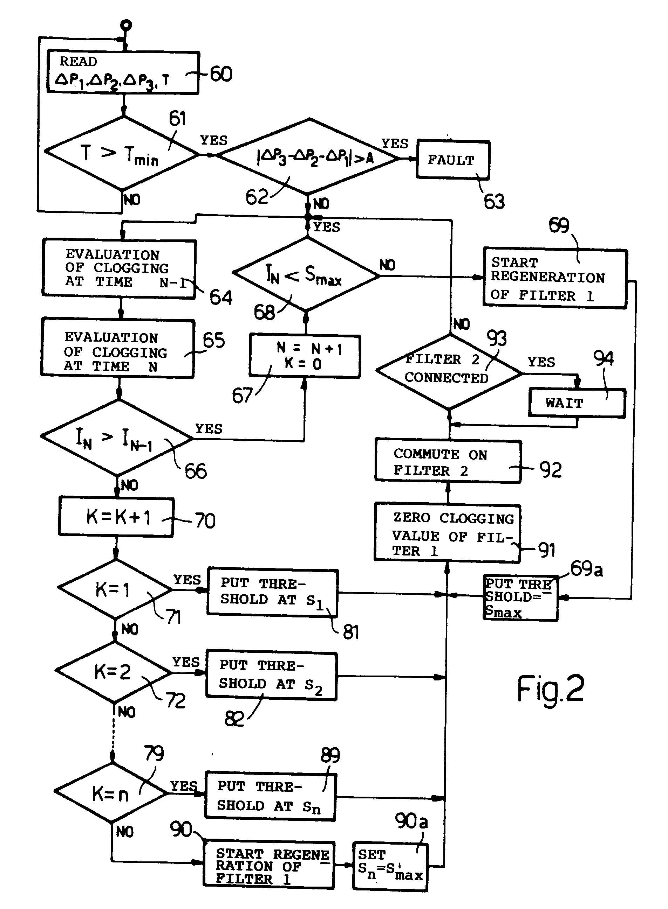

The operation of the apparatus 10 is described hereinafter in detail with reference to Figure 2.

The operation starts with a block 60 which reads the data provided by the sensors, 31, 32, 33, 34, after which comes a comparison block 61 which checks if the temperature T measured by the sensor 34 is greater than a predetermined minimum value Tm.

If the result is negative, the procedure returns to the input of block 60 to prevent processing of the data provided by the other sensors, which are not accurate for low temperatures.

If the result is positive, the program passes to a comparison block 62, which checks if the absolute value of the subtraction of $\Delta p1$ and $\Delta p2$ from $\Delta p3$ is greater than a small predetermined value indicated by A. If the result is positive, this signifies that the data provided by at least one of the sensors 31, 32, 33, is in error, so that the program passes to a block 63 which indicates a fault in the system and lights the lamp 55. If the result is negative, the program passes to the evaluation of clogging (for example of the filter 1) by block 64.

Block 64 and the next block 65 calculate the clogging of the filter 1 at times N-1 and N to provide two values indicated by IN-1 and IN. A block 66 is then reached to check if the last calculated clogging value (IN) is greater than the preceding (IN-1).

If the result is positive, this signifies that there has been a further accumulation of particles between the two calculation times, and it is therefore necessary to check whether the maximum clogging value (Smax) has been exceeded, and thus initiate regeneration, or to again execute the clogging calculation as described heretofore. This is done by passing from block 66 to block 67, in which N is put equal to N + 1 and setting a counter K to 0, to then pass to a block 68 for comparing IN with Imax, and then to a block 69 for initiating regeneration of the filter 1 (by activating the burner 21 and lighting the indicator lamp 53), or again to the input of block 64.

If the result is negative, this signifies that partial spontaneous regeneration of the filter 1 has occurred, and the program passes to a block 70 which sets the counter content K to K + 1. Depending on the effective value assumed by the parameter K (variable for example from 1 to n), a plurality of comparison blocks 71, 72, ....79 are traversed to reach a respective command block 81, 82,....89, which progressively lowers the value of the regeneration limit threshold to S1, S2,....Sn respectively. If the value of K is n + 1, the program passes directly to a block 90 for initiating regeneration of the filter 1 in the same manner as described with reference to said block 69, to then pass to a block 90a which reinstates Smax as the regeneration threshold value.

The program passes from the blocks 81,.....89 and from the block 90a to a block 91, which zeroes the value relative to the clogging of the filter 1. The block 91 is also reached from the block 69 after passing through a block 69a which reinstates Smax as the regeneration threshold.

The program passes from block 91 to a block 92, which causes a signal to he fed to the terminal 15 of the unit 50 to switch over the solenoid valves 13, 14 and consequently deviate the exhaust gas from the engine 3 to the filter 2.

At this point, a comparison block 93 checks whether the filter 2 is connected and remains in a waiting state passing through a timer block 94 to execute the same check periodically.

If the result of the check is negative, the program returns to the input of the computing block 64 to repeat the aforesaid cycle.

In a manner not illustrated but parallel to the aforesaid, the unit 50 also checks constantly whether the time period which has passed from the last regeneration command lies between a minimum value and a maximum value, and if it does not the unit provides a fault signal for example to light the indicator lamp 55.

The advantages of the method and apparatus of the present invention are apparent from an examination of their characteristics.

Firstly, the progressive lowering of the intervention threshold eliminates the problems caused by spontaneous regeneration.

Arranging the sensors in the container 35 and enabling the data provided by them to be used only when the temperature reaches an optimum value means that the sensors can be used over that part of their characteristic curve of greatest accuracy, with undoubted advantages from the point of view of most favourable overall management of regeneration. In addition the presence of the third sensor 33 enables any casual or systematic errors in the measurement of the various pressure differences to be identified, so further improving reliability.

Connecting the filters 1 and 2 in parallel enables the same sensors and the same venturi device to be used for both, so significantly limiting cost.

Finally, checking the time period which has passed since the last regeneration enables operating faults which may have escaped the previous checks to be detected. For example, a too frequent request for regeneration could not be realistic as it is not possible for the particulate to accumulate in the filter in such quantity in a short time. It could instead be the case that the filter is really clogged but the apparatus is unable to detect this because the clogging calculation can give results which are lower than the true results if the engine 3 operates at low r.p.m., the measurement across the venturi device 6 then possibly being in considerable error.

Finally, it is apparent that modifications can be made to the aforesaid method and apparatus but without leaving the scope of the claims.

For example the engine could be configured with a single particulate filter provided with a by-pass, or could comprise several filters connected in parallel, provided the aforesaid concept is respected.

**Claims**

1. A method controlling the regeneration of at least one particulate filter (1, 2) installed in a diesel engine, wherein the level of clogging of said filter (1, 2) caused by progressive accumulation therein of the particulate is periodically calculated, and wherein an intentional regeneration (69, 90) of said filter (1, 2) is caused when said clogging level reaches a predetermined upper clogging limit (68), characterized by
   - periodically comparing (66) the last calculated clogging level with the previous calculated clogging level after said intentional regeneration (69, 90);
   - and defining a new upper clogging limit (81, 89) progressively lower than the previously defined upper clogging limit each time said comparison reveals a reduction of said clogging level (81, 89).

2. A method as claimed in claim 1, characterized by causing another intentional regeneration (90) if a predetermined number (n) of consecutive reductions in said clogging level are revealed in consecutive comparisons (66) after the previous intentional regeneration (69, 90).

3. A method according to claim 2, characterized by restating (69a, 90a) said predetermined upper clogging limit and zeroing (91) said calculated level of clogging after each one of said intentional regenerations (69, 90).

4. A method according to any previous claim, characterized by checking the time interval passed between two consecutive intentional regenerations (69, 90), comparing said time interval with a minimum time threshold and with a maximum time threshold, and providing a fault indication if said time interval does not lies between said time thresholds.

5. A device controlling the regeneration of at least one particulate filter (1, 2) installed in a diesel engine, according to the method of claim 1, comprising means (31, 32, 33) for measuring quantities related to the clogging of said filter (1, 2) by said particulate, means (50) for processing said quantities and calculating the level of clogging of said filter (1, 2) caused by the progressive accumulation of said particulate, means (50) for memorizing a predetermined upper clogging threshold for said filter (1, 2), and regeneration means (21, 22) adapted to be controlled for an intentional regeneration of said filter (1, 2) when said level of clogging exceeds said predetermined clogging threshold, characterized by comparing means (50) for periodically comparing the last clogging level calculated by said processing means with the previous calculated clogging level after said intentional regeneration, and control means (50) responsive to said comparing means for causing said memorizing means to replace the memorized clogging threshold with a new clogging threshold progressively lower than the previously memorized clogging threshold each time a reduction of said clogging level is revealed.

6. A device as claimed in claim 5, characterized in that said control means (50) include counting means for counting the number of consecutive reductions in the counting level which have not resulted from said intentional regeneration, said control means (5) being adapted to control said regeneration means (21, 22) for another intentional regeneration when said number exceeds a predetermined value.

7. A device as in claimed in claim 6, characterized in that said control means (50) upon controlling an intentional regeneration are also adapted to control said memorizing means to restate said predetermined clogging threshold and to cause said processing means to provide a zero value for the clogging measurement subsequent to said intentional regeneration.

8. A device as claimed in any claim from 5 to 7, wherein said measuring means (31, 32, 33) include a first pressure difference sensor (31) connected between an inlet and an outlet of said filter (1, 2), and wherein a venturi device (6) is connected downstream of said filter (1, 2), characterized in that said measuring means (31, 32, 33) include also a second pressure difference sensor (31) connected between said outlet and said venturi device (6) and a third pressure difference sensor (33) connected between said inlet and said venturi device (6) substantially in parallel with said first and second pressure difference sensors (31, 32), said control means (50) being adapted to check whether at least one of the measurements supplied by said sensors (31, 32, 33) is in error and to enable consequently a fault indicator.

9. A device as claimed in claim 8, characterized by container means (35) internally housing said pressure difference sensors (31, 32, 33), a temperature sensor (34) being housed in said container means (35) to sense the temperature thereof, said processing means (50) being connected with said temperature sensor (34) and being adapted for reading the data provided by said pressure difference sensors (31, 31, 33) only if said temperature exceeds a predetermined minimum temperature.

10. A device as claimed in 8 or 9, wherein at least two filters (1 and 2) are installed in parallel in said diesel machine, and wherein individual shutoff means (13, 14) are installed upstream of said filters (1, 2) and are controlled for rendering said filters (1, 2) individually effective, characterized in that said venturi device (6) is connected downstream of both said filters (1, 2), and said measuring means (31, 32, 33) are adapted to measure each time the level of clogging of the filter (1, 2) presently effective, said control means (50) being adapted to switch the operation of said shutoff means (13, 14) to sequentially render said filters (1, 2) upon controlling each one of said intentional regenerations.

**Patentansprüche**

1. Verfahren zur Steuerung der Regeneration wenigstens eines Partikelfilters (1,2), das in einer Dieselmaschine installiert ist, bei dem das Maß der Verstopfung des Filters (1,2), die durch zunehmende Ansammlung von Partikeln im Filter verursacht ist, periodisch berechnet wird, und bei dem eine innere Regeneration (69,90) des Filtes (1,2) verursacht wird, wenn das Maß der Verstopfung einen vorgegebenen oberen Verstopfungsgrenzwert (68) erreicht, **gekennzeichnet** durch

- ein periodisches Vergleichen (66) des zuletzt berechneten Verstopfungsmaßes mit dem zuvor berechneten Verstopfungsmaß nach der beabsichtigen Regeneration (69,90);

- und Definieren eines neuen oberen Verstopfungsgrenzwertes (81,89), der zunehmend niedriger ist als der zuvor definierte obere Verstopfungsgrenzwert, jeweils wenn der Vergleich eine Reduktion des Verstopfungsmaßes (81,89) zeigt.

2. Verfahren nach Anspruch 1, dadurch **gekennzeichnet**, daß eine andere beabsichtigte Regeneration (90) verursacht wird, wenn eine vorgegebene Anzahl (n) von aufeinander folgenden Reduktionen im Verstopfungsmaß bei aufeinander folgenden Vergleichen (66) nach der vorhergehenden beabsichtigten Regeneration (69,90) festgestellt worden ist.

3. Verfahren nach Anspruch 2, **gekennzeichnet** durch Wiederherstellen (69a,90a) des vorgegebenen oberen Verstopfungsgrenzwertes und Auf-Null-Setzen (91) des berechneten Maßes der Verstopfung nach jeder beabsichtigten Regeneration (69,90).

4. Verfahren nach einem der vorhergehenden Ansprüche, **gekennzeichnet** durch Prüfen des Zeitintervalls zwischen zwei aufeinander folgenden, beabsichtigten Regenerationen (69,90), Vergleichen des Zeitintervalls mit einem Mindestzeit-Schwellenwert und einem Höchstzeit-Schwellenwert, und Anzeigen eines Fehlers, wenn das Zeitintervall nicht zwischen diesen Zeit-Schwellenwerten liegt.

5. Vorrichtung zur Steuerung der Regeneration von wenigstens einem Partikelfilter (1,2), das in einer Dieselmaschine installiert ist, gemäß dem Verfahren des Anspruchs 1, mit einer Einrichtung (31,32,33) zum Messen der Mengen, die die Verstopfung des Filters (1,2) durch Partikel bewirken, einer Einrichtung (50) zum Verarbeiten der Mengen und Berechnen des Maßes der Verstopfung des Filters (1,2) durch zunehmende Ansammlung der Partikel, einer Einrichtung zum Speichern eines vorgegebenen oberen Verstopfungs-Schwellenwertes für das Filter (1,2), und einer Regenerations-Einrichtung (21,22), die für eine beabsichtigte Regeneration des Filters (1,2) angesteuert wird, wenn das Verstopfungsmaß den vorgegebenen Verstopfungs-Schwellenwert überschreitet, **gekennzeichnet** durch eine Vergleichs-Einrichtung (50) zum periodischen Vergleichen des letzten Verstopfungsmaßes, das durch die Verarbeitungseinrichtung berechnet worden ist, mit dem früheren Verstopfungsmaß nach der beabsichtigten Regeneration, und eine Steuereinrichtung (50), die auf die Vergleichseinrichtung anspricht und bewirkt, daß die Speichereinrichtung den gespeicherten Verstopfungs-Schwellenwert durch einen neuen Verstopfungs-Schwellenwert ersetzt, der zunehmend niedriger als der zuvor gespeicherte Verstopfungs-Schwellenwert ist, und zwar jeweils dann, wenn eine Reduktion des Verstopfungsmaßes entdeckt wird.

6. Vorrichtung nach Anspruch 5, dadurch **gekennzeichnet**, daß die Steuereinrichtung (50) eine Zähleinrichtung zum Zählen der Anzahl der aufeinander folgenden Reduktionen des Zählmaßes, die nicht aus der beabsichtigten Regeneration resultiert sind, umfaßt, welche Steuereinrichtung (5) die Regenerationseinrichtung (21) für eine weitere beabsichtigte Regeneration ansteuert, wenn die Anzahl einen vorgegebenen Wert überschreitet.

7. Vorrichtung nach Anspruch 6, dadurch **gekennzeichnet**, daß die Steuereinrichtung (50) beim Ansteuern einer beabsichtigten Regeneration auch die Speichereinrichtung ansteuert, so daß diese den vorgegebenen Verstopfungs-Schwellenwert wiederherstellt und die Verarbeitungseinrichtung einen Null-Wert für die Verstopfungsmessung anschließend an die beabsichtigte Regeneration liefert.

8. Vorrichtung nach einem der Ansprüche 5 bis 7, bei der die Meßeinrichtung (31,32,33) einen ersten Druckdifferenzsensor (31), der zwischen dem Einlaß und dem Auslaß des Filters (1,2) angeordnet ist, umfaßt, wobei eine Venturi-Einrichtung (6) stromabwärts des Filters (1,2) angeordnet ist, dadurch **gekennzeichnet**, daß die Meßeinrichtung (31,32,33) auch einen zweiten Druckdifferenzsensor (31) aufweist, der zwischen dem Auslaß und der Venturi-Einrichtung (6) liegt, und einen dritten Druckdifferenzsensor (33), der zwischen dem Einlaß und der Venturi-Einrichtung (6) im wesentlichen parallel zu den ersten und zweiten Druckdifferenzsensoren (31,32) liegt, welche Steuereinrichtung prüft, ob wenigstens eine der Messungen der Sensoren (31,32,33) fehlerhaft arbeitet, so daß anschließend eine Fehleranzeige eingeschaltet wird.

9. Vorrichtung nach Anspruch 8, **gekennzeichnet** durch eine Behälter-Einrichtung (35), die im Inneren die Druckdifferenzsensoren (31,32,33) aufnimmt, einen Temperatursensor (34), der in der Behälter-Einrichtung (35) angeordnet ist und dessen Temperatur abtastet, welche Verarbeitungseinrichtung (50) mit dem Temperatursensor (34) verbunden ist und die Daten der Druckdifferenzsensoren (31,32,33) nur dann abliest, wenn die Temperatur eine vorgegebene Mindesttemperatur überschreitet.

10. Vorrichtung nach Anspruch 8 oder 9, bei der wenigstens zwei Filter (1,2) parallel zueinander in der Dieselmaschine angeordnet sind, und bei der gesonderte Schließeinrichtungen (13,14) stromaufwärts der Filter (1,2) angeordnet und derart gesteuert sind, daß sie die Filter (1,2) gesondert in Betrieb setzen, dadurch **gekennzeichnet**, daß die Venturi-Einrichtung (6) stromabwärts der beiden Filter (1,2) angeordnet ist und daß die Meßeinrichtung (31,32,33) jeweils das augenblicklich geltende Verschmutzungsmaß des Filters (1,2) mißt, welche Steuereinrichtung den Betrieb der Schließeinrichtungen (13,14) schaltet und die Filter (1,2) nacheinander bei Störung jeder der beabsichtigten Regenerationen einsetzt.

## Revendications

1. Procédé de commande de la régénération d'au moins un filtre (1, 2) à particules installé dans un moteur Diesel, dans lequel le niveau d'engorgement dudit filtre (1, 2) provoqué par une accumulation progressive des particules dans celui-ci est calculé périodiquement et dans lequel une régénération intentionnelle (69, 90) dudit filtre (1, 2) est provoquée lorsque ledit niveau d'engorgement atteint une limite supérieure prédéterminée (68) d'engorgement, caractérisé en ce qu'il consiste

   - à comparer périodiquement (66) le dernier niveau calculé d'engorgement avec le niveau calculé précédent d'engorgement après ladite régénération intentionnelle (69, 90) ;
   - et à définir une nouvelle limite supérieure d'engorgement (81, 89) progressivement inférieure à la limite supérieure d'engorgement définie précédemment à chaque fois que ladite comparaison révèle une baisse dudit niveau d'engorgement (81, 89).

2. Procédé selon la revendication 1, caractérisé en ce qu'il consiste à provoquer une autre régénération intentionnelle (90) si un nombre prédéterminé (n) de baisses consécutives dudit niveau d'engorgement est révélé dans des comparaisons consécutives (66) après la régénération intentionnelle précédente (69, 90).

3. Procédé selon la revendication 2, caractérisé en ce qu'il consiste à spécifier de nouveau (69a, 90a) ladite limite supérieure prédéterminée d'engorgement et à mettre à zéro (91) ledit niveau calculé d'engorgement après chacune desdites régénérations intentionnelles (69, 90).

4. Procédé selon l'une quelconque des revendications précédentes, caractérisé en ce qu'il consiste à contrôler l'intervalle de temps passé entre deux régénérations intentionnelles consécutives (69, 90), à comparer ledit intervalle de temps avec un seuil de temps minimal et avec un seuil de temps maximal, et à produire une indication de défaut si ledit intervalle de temps n'est pas compris entre lesdits seuils de temps.

5. Dispositif commandant la régénération d'au moins un filtre (1, 2) à particules installé dans un moteur Diesel, conformément au procédé de la revendication 1, comportant des moyens (31, 32, 33) destinés à mesurer des quantités liées à l'engorgement dudit filtre (1, 2) par lesdites particules, des moyens (50) destinés à traiter lesdites quantités et à calculer le niveau d'engorgement dudit filtre (1, 2) provoqué par l'accumulation progressive desdites particules, des moyens (50) destinés à mémoriser un seuil supérieur prédéterminé d'engorgement pour ledit filtre (1, 2), et des moyens de régénération (21, 22) destinés à être commandés pour une régénération intentionnelle dudit filtre (1, 2) lorsque ledit niveau d'engorgement dépasse ledit seuil prédéterminé d'engorgement, caractérisé par des moyens (50) de comparaison destinés à comparer périodiquement le dernier niveau d'engorgement calculé par lesdits moyens de traitement avec le niveau calculé précédent d'engorgement après ladite régénération intentionnelle, et des moyens de commande (50) qui, en réponse auxdits moyens de comparaison, amènent lesdits moyens de mémorisation à remplacer le seuil mémorisé d'engorgement par un nouveau seuil d'engorgement progressivement inférieur au seuil d'engorgement précédemment mémorisé chaque fois qu'une baisse dudit niveau d'engorgement est révélée.

6. Dispositif selon la revendication 5, caractérisé en ce que lesdits moyens de commande (50) comprennent un moyen de comptage destiné à compter le nombre de baisses consécutives du niveau de comptage qui n'ont pas résulté de ladite régénération intentionnelle, lesdits moyens de commande (50) étant destinés à commander lesdits moyens de régénération (21, 22) pour une autre régénération intentionnelle lorsque ledit nombre dépasse une valeur prédéterminée.

7. Dispositif selon la revendication 6, caractérisé en ce que lesdits moyens de commande (50), en commandant une régénération intentionnelle, sont également destinés à commander lesdits moyens de mémorisation pour spécifier de nouveau ledit seuil prédéterminé d'engorgement et pour amener lesdits moyens de traitement à produire une valeur égale à zéro pour la mesure d'engorgement à la suite de ladite régénération intentionnelle.

8. Dispositif selon l'une quelconque des revendications 5 à 7, dans lequel lesdits moyens de mesure (31, 32, 33) comprennent un premier capteur (31) de différence de pression connecté entre une entrée et une sortie dudit filtre (1, 2), et dans lequel un dispositif à venturi (6) est relié en aval dudit filtre (1, 2), caractérisé en ce que lesdits moyens de mesure (31, 32, 33) comprennent aussi un deuxième capteur (31) de différence de pression connecté entre ladite sortie et ledit dispositif à venturi (6) et un troisième capteur (33) de différence de pression connecté entre ladite entrée et ledit dispositif à venturi (6), sensiblement en parallèle avec lesdits premier et second capteurs (31, 32) de différence de pression, lesdits moyens de commande (50) étant destinés à contrôler si au moins l'une des mesures fournies par lesdits capteurs (31, 32, 33) est en erreur et à valider, en conséquence, un indicateur de défaut.

9. Dispositif selon la revendication 8, caractérisé par un boîtier (35) renfermant à l'intérieur lesdits capteurs (31, 32, 33) de différence de pression, un capteur (34) de température logé dans ledit boîtier (35) pour en capter la température, lesdits moyens de traitement (50) étant connectés audit capteur (34) de température et étant destinés à lire les donnnées produites par lesdits capteurs (31, 32, 33) de différence de pression uniquement si ladite température dépasse une température minimale prédéterminée.

10. Dispositif selon la revendication 8 ou 9, dans lequel au moins deux filtres (1 et 2) sont installés en parallèle dans ledit moteur Diesel, et dans lequel des moyens d'arrêt individuels (13, 14) sont installés en amont desdits filtres (1, 2) et sont commandés afin de rendre lesdits filtres (1, 2) individuellement actifs, caractérisé en ce que ledit dispositif à venturi (6) est relié en aval des deux filtres (1, 2) et lesdits moyens de mesure (31, 32, 33) sont destinés à mesurer à chaque fois le niveau d'engorgement du filtre (1, 2) présentement actif, lesdits moyens de commande (50) étant destinés à commuter le fonctionnement desdits moyens d'arrêt (13, 14) pour rendre séquentiellement lesdits filtres (1, 2) individuellement actifs à la suite d'une commande de chacune desdites régénérations intentionnelles.

EP 0 349 788 B1

Fig.1

Fig.2

Fig.3

Fig.4